# EUROPEAN PATENT APPLICATION

(11) **EP 1 796 200 A1**
(43) Date of publication of application: **13.06.2007**
(21) Application number: 05077779.6
(22) Date of filing: 06.12.2005
(51) Int. Cl.: H01M 12/04, H01M 12/06, H01M 12/08, H01M 4/86, H01M 4/88, H01M 4/90

(54) **Bifunctional air electrode**

(71) Applicant: ReVolt Technology AS, 7431 Trondheim (NO)
(72) Inventor: Burchardt, Trygve, 7014 Trondheim (NO)
(74) Representative: Marchant, James Ian

(57) **Abstract**

Air electrodes for metal-air batteries or metal hydride-air batteries, in particular, bifunctional air electrodes that can undergo oxygen reduction and oxygen evolution with high reaction rates. A method of manufacturing such electrodes.

## Description

### Introduction

This invention relates to air electrodes for metal-air batteries or metal hydride-air batteries, and in particular, to bifunctional air electrodes that can undergo oxygen reduction and oxygen evolution with high reaction rates and to a method of manufacturing such electrodes.

### Background of the Invention

To a large extent development of the air electrode has been focused on fuel cell applications. Therefore, studies of the oxygen reduction reaction dominate. The alkaline fuel cell (AFC) system shows high reaction rates and stability for oxygen reduction with the use of non-noble metal based materials. The reaction takes place on finely dispersed catalysts with a high surface reaction area. By careful control of the hydrophobicity and the pore size distribution a stable three phase zone is established inside the electrode. Typically, air electrodes in AFC applications show stable behaviour (less than 10 % increase in overpotential) for more than 10 000 hours. Such systems are operated at temperatures of 60-90 °C.

The main cause for instability, when using air electrodes for oxygen reduction, is the flooding of the electrode. This is caused by the slow penetration of electrolyte into the electrode. The diffusion path for oxygen into the structure is thus increased resulting in a reduced rate of reaction for the oxygen reduction reaction.

Air electrodes are commercially used in primary metal-air batteries. Such batteries use metals such as zinc (Zn), aluminium (Al), iron (Fe), etc. as the energy carrier. The anodic dissolution of the metal releases electrons that are transported through an external circuit to the cathode where the electrons are consumed by the reduction of oxygen from air forming hydroxide ions. The hydroxide ions dissolve in the electrolyte and they are transported to the anode by diffusion. On the anode hydroxide reacts with the dissolved metal ions forming metal oxides. Such electrodes are typically used in systems that require less than 100 hours lifetime under load and lifetime stability for the electrode is not a main issue. Of more importance is the slow drying out of the electrolyte due to water vapour loss.

To increase the stability and activity of the air electrode a combination of several catalysts has been proposed for the oxygen reduction reaction. For instance, one catalyst can be used for oxygen reduction and a second for the reduction of reactive intermediates in the oxygen reduction reaction mechanism. Such intermediates might attack and break down the carbon structure or the binding materials used for the air electrode.

In WO 02/075827 high activity for the oxygen reduction reaction is obtained over long time periods by the use of two catalysts. Although this application does not give a clear understanding of the reaction mechanism involved, it clearly shows the benefit of using a combination of several catalytic materials to increase activity and stability.

Catalysts for the oxygen reduction reaction include silver, platinum, platinum-ruthenium, spinel, perovskites, and iron, nickel or cobalt macrocyclics and other catalysts well known to those skilled in the art.

In US patent 6,127,061 an air cathode is shown. The patent shows that metal hydroxides such as nickel hydroxide, cobalt hydroxide, iron hydroxide, cerium hydroxide, manganese hydroxide, lanthanum hydroxide or chromium hydroxide will act as a catalyst for the oxygen reduction reaction. The patent claims this is due to a change in the valence of the hydroxide by interaction with oxygen.

In US patent 5,308,711 manganese compounds of valence state +2 are used as a catalyst for the oxygen reduction reaction. It is shown that the catalyst is formed between carbon particles after the carbon particles are added to an aqueous solution of potassium permanganate. The patent shows that high catalytic activity for the oxygen reaction can be obtained with manganese compounds of valence state +2. The use of higher valence manganese oxides is well known.

Many attempts have been made to develop secondary metal-air batteries but so far the development has not resulted in solutions that can meet the requirements of the industry. Metal-air batteries having the combined characteristics of high capacity, high power, rechargeability, long discharge/charge cycle life, minimum size and weight, economy of manufacture, and environmental safety have yet to be developed.

One of the main challenges for the successful development of secondary metal-air batteries is related to the air electrode. Although high stability for the oxygen reduction reaction has been obtained with air electrodes in alkaline fuel cell applications, such electrodes have to be modified before they can be used in secondary battery applications (rechargeable batteries). For a secondary metal-air battery the energy released during discharge is regenerated by increasing the voltage of the cell resulting in a reduction of the metal oxides. Oxygen evolution occurs on the air electrode. Air electrodes with high oxygen evolution rates, without dissolution of the catalyst and mechanical degradation of the electrode, have yet to be developed. An air electrode giving stable rates for both oxygen reduction and oxygen evolution over several hundred charge/discharge cycles is required for secondary metal-air batteries.

Some bifunctional air electrodes with catalysts working both for oxygen reduction and evolution have been developed. In the latest development the use of perovskite and spinel type materials have shown promise. However, the rate of oxygen evolution is low. This is due to the limited anodic potential range in which such catalysts can be used without degradation of the materials and subsequent loss in activity during oxygen reduction. So far current density of 5-10 mA/cm² seems to be the limit.

Another approach is the use of several catalysts in the air electrode. One catalyst is selected for the oxygen evolution reaction and a second catalyst for oxygen reduction. Preferably, an oxygen reduction catalyst is used having an oxygen evolution potential greater than about 2.1 V and an oxygen evolution catalyst is used having an oxygen evolution potential of less than 2 V. Thus the metal-air cell containing such air electrodes can be recharged at a lower potential so that the metal-air cell deteriorates more slowly than if recharged at the higher voltage. Oxygen evolution catalysts can be selected from materials such as WC or WC fused cobalt, CoWO₄, FeWO₄, NiS and WS₂, which have shown promise.

US Patent 4,341,848 shows that the use of a mixture of selected catalysts for the oxygen evolution and reduction reactions increased stability. Electrode stability after several hundred cycles was reported. In US Patent 5,306,579 a similar approach is shown, however, in this patent the oxygen evolution catalyst is accumulated at the air side of the electrode. The patent claims that by increasing the concentration of the oxygen evolution catalyst towards the air side of the electrode the diffusion path for the oxygen which is produced is reduced and fewer oxygen gas pockets are formed in the electrolyte.

However, all previous patents on bifunctional air electrodes have shown only low rates for the oxygen evolution reaction (< 50 mA/cm²). This is due to the materials selected and the rate of oxygen diffusion out of the hydrophobic gas channels. The consequence is that long charge times are required. For use in power electronics rapid charging is essential and further development of such electrodes is therefore necessary.

So far a method for the production of a bifunctional air electrode with high oxygen reduction and oxygen evolution rates has yet to been developed. The object of the present invention is to provide a method to combine the oxygen evolution and oxygen reduction properties of a bifunctional electrode and to provide an electrode which gives high rates for both oxygen evolution and oxygen reduction.

### Summary of the Invention

In a first aspect the present invention provides a bifunctional air electrode for a metal-air battery comprising a gas diffusion layer, an active layer, an oxygen evolution layer and a current collector in electrical contact with the active layer; wherein the active layer contains an oxygen reduction catalyst and a bifunctional catalyst.

In a second aspect the invention provides a metal-air battery comprising a bifunctional air electrode as defined above.

In a third aspect the invention provides a metal hydride-air battery comprising a bifunctional air electrode as defined above.

### Brief Description of the Drawings

Figure 1 shows polarisation curves for oxygen reduction on air electrodes with (A) MnSO₄, (B) La₂O₃ and (A+B) La₂O₃ and MnSO₄ as catalysts;
Figure 2 shows the stability of air electrodes with La₂O₃ and MnSO₄ as catalysts. The figure shows cycles number 1 to 150 at charge/discharge rates of 100 mA/cm² and with a charge and discharge capacity of 626 mAh/cm² per cycle;
Figure 3 shows the stability of air electrodes with La₂O₃ and MnO₂ as catalysts. The figure shows cycles number 1 to 95 at charge/discharge rates of 100 mA/cm² and with a charge and discharge capacity of 626 mAh/cm² per cycle;
Figure 4 shows the stability of air electrodes with (A) Ag and MnSO₄, (B) Ag and (C) Ag and La₂O₃ as catalysts. The figure shows cycles number 1 to 50 at charge/discharge rates of 100 mA/cm² and with a charge and discharge capacity of 626 mAh/cm² per cycle.

### Description of the Invention

The present invention provides a new bifunctional air electrode. This electrode will allow high rates of oxygen reduction and oxygen evolution. The electrode is stable for several hundred charge/discharge cycles when used in a metal-air battery. The invention also provides a combination of materials that allows high reaction rates for the oxygen reduction reaction using materials that allow high reaction rates for the oxygen evolution reaction.

In order for a bifunctional air electrode to work, there are several factors to be considered.

Firstly, an active layer with high reaction rates for oxygen reduction and high stability is necessary. The oxygen reduction reaction requires a 3 phase boundary for the reaction to take place. The gas (air) penetrates into the electrode by means of hydrophobic channels. Electrolyte enters the electrode by capillarity forces acting in the narrow hydrophilic pore structure. Catalyst particles with a high surface area for oxygen reduction are present inside the electrode. This increases the rate of oxygen reduction. The rate of reaction is highest close to the 3 phase boundary and diminishes further into the electrolyte filled channels.

Secondly, contrary to the selective reaction zone required for oxygen reduction, the oxygen evolution reaction occurs throughout the total flooded area of the electrode. Hydroxide ions are oxidised to form oxygen which results in a local pressure difference within the electrode. A pressure build up inside the electrode by oxygen evolution may cause mechanical degradation of the electrode and it is, therefore, important that oxygen is transported out of the interior electrode surface.

Thirdly, it is important that leakage of electrolyte from the inside of the battery through the air electrode is prevented. The active layer where the reactions take place will be partly filled with the electrolyte. Therefore, if the air side of the battery is not protected, a slow leakage of the electrolyte will occur. This can be prevented by adding a separate layer facing the air side of the electrode. This layer should be completely hydrophobic in order to prevent electrolyte penetration. In order to maintain high reaction rates for the oxygen reduction reaction, this layer must maintain high diffusion capability for oxygen.

The present invention provides new material combinations for bifunctional air electrodes. More particularly, the invention is based on the use of two types of catalytic materials with different properties for the reactions that take place within the electrode. The use of two types of catalysts gives the electrode unique properties that allow high rates of reaction and high stability.

The invention makes use of one catalyst that is an oxygen reduction catalyst and a second catalyst that acts as a bifunctional catalyst. The use of this combination of catalysts increases the stability of the electrode under oxygen reduction and oxygen evolution. As used herein the term "oxygen reduction catalyst" means a catalyst that shows high rates for the oxygen reduction reaction only (i.e. does not show any significant catalytic effect for the oxygen evolution reaction) and high stability under prolonged discharge. The term "bifunctional catalyst" means a catalyst that shows high reaction rates and stability for both the oxygen reduction reaction and the oxygen evolution reaction. For example, a bifunctional catalyst may show high catalytic activity above the activity of carbon for oxygen evolution, and stability at high rates (20-2000 mA/cm²) of oxygen evolution. A high rate of oxygen evolution is, for example, >50mA/cm² at 1.95 -2.05 vs Zn. A high rate of oxygen reduction is, for example, > 50 mA/cm² at 1V vs. Zn and increased activity compared to the use of a sample only containing the carbon pore former.

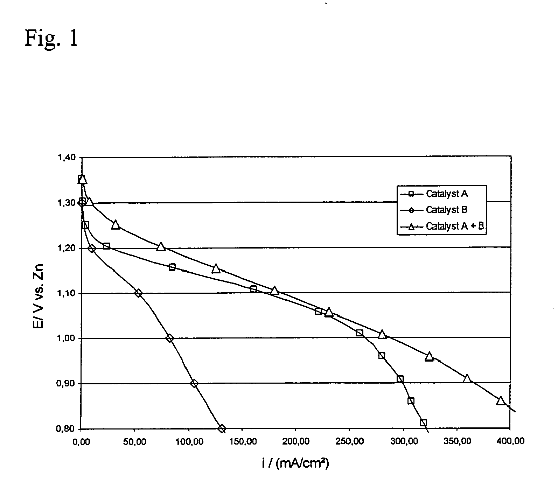

The combination of two such catalysts increases the activity of the oxygen reduction reaction. This increase in activity is related to the interaction between the two selected catalysts. This is shown by the fact that equivalent amounts of the two catalysts used separately gives lower activity than when the two catalysts are combined (see Figure 1). Whilst not wishing to be bound by any particular theory, the increased activity can be explained by an interaction between the catalysts in which each catalyst takes part in different steps in the reaction mechanism for the oxygen reduction reaction. For the oxygen reduction reaction especially, catalyst combinations in which one of the catalysts is a bifunctional catalyst that acts on both the oxygen reduction and the oxygen evolution reaction is beneficial. La₂O₃ is such a catalyst as it is catalytically active both towards oxygen reduction and oxygen evolution. MnSO₄ on the other hand is a catalyst that predominantly increases the activity of the oxygen reduction reaction.

Other oxygen reduction catalysts include MnO₂, KMnO₄, MnSO₄, SnO₂, Fe₂O₃, Co₃O₄, Co, Fe, Pt and Pd. Other bifunctional catalysts include materials such as La₂O₃, Ag₂O, Ag, spinels and perovskites.

Spinels are a group of oxides of general formula AB₂O₄, where A represents a divalent metal ion such as magnesium, iron, nickel, manganese and/or zinc and B represents trivalent metal ions such as aluminium, iron, chromium and/or manganese.

Perovskites are a group of oxides of general formula AXO₃, where A is a divalent metal ion such as cerium, calcium, sodium, strontium, lead and/or various rare earth metals; and X is a tetrahedral metal ion such as titanium, niobium and/or iron. All members of this group have the same basic structure with the XO₃ atoms forming a framework of interconnected octahedrons.

In one embodiment of the invention La₂O₃ is used as a catalyst for the oxygen evolution reaction. This catalyst can be used in combination with oxygen reduction catalysts well known to those skilled in the art, including catalysts such as MnO₂, KMnO₄, MnSO₄, SnO₂, Fe₂O₃, Co₃O₄, Co, Fe, Pt and Pd.

In a further embodiment of the invention a binder such as polytetrafluoroethylene (PTFE) is used to bind the catalyst particles into an electrode to form the 3-dimentional hydrophobic structure for oxygen transport into the electrode.

In another embodiment of the invention, a pore former is used to maintain a large surface of the catalyst exposed to the electrolyte. The pore former can be a material such as ammonium bicarbonate (NH₄HCO₃) that will evaporate or dissolve resulting in the formation of pores.

The pore former can also be a material such as high surface area carbon or graphite that, mixed with the catalyst, will result in a hydrophilic pore structure exposing the catalyst to the electrolyte.

In another embodiment of the invention the materials used as catalysts for the reactions can be made as separate powders or deposited onto a porous support such as high surface area carbons or graphite. A hydrophopic binder is used to agglomerate the powder samples together, for instance a PTFE may be used. A pore former may be added to the powder mixture to increase the active surface area for the three phase reaction zone within the electrode.

In a further embodiment of the invention the bifunctional air electrode consists of one or more electrode layers that contribute to the various properties of the electrode. Close to the air side of the electrode, a layer that allows gas penetration but prevents liquid penetration is used. This porous and hydrophobic layer is called the gas diffusion layer (GDL). The reactions take place in one or more layers closely bonded to this layer. For the oxygen reduction reaction, a layer which allows oxygen and electrolyte penetration to the reaction zone is required. This layer with a double pore structure of both hydrophobic and hydrophilic pores is called the active layer (AL). For the oxygen evolution reaction, a layer with a hydrophilic pore structure is required so as to allow sufficient electrolyte penetration into the reaction zone for oxygen evolution. This layer with a hydrophilic pore structure is called the oxygen evolution layer (OEL). The electrode may be assembled by rolling the layers together, and then pressing with Ni-mesh (e.g. at 60-80 bars, 80 °C).

In one embodiment of the invention both oxygen reduction and oxygen evolution takes place in the same layer. This layer then has the combined properties of the AL and the OEL.

In a further embodiment of the invention the AL and the OEL are provided as two separate layers.

In another embodiment of the invention both the oxygen reduction and the oxygen evolution reactions take place in the same layer, but this layer is made in such a manner that the catalysts for oxygen evolution and oxygen reduction have different locations within the layer in order to minimise the negative influence that the reactions have on each other.

All layers required for the air electrode can be produced using the same production methods. Firstly, the pore forming materials, the catalysts, the binding materials and other additives are mixed under the influence of mechanical, thermal or mechanical and thermal energy. In this process the materials are well distributed and the hydrophobic binder forms a three dimensional network connecting the powders into an agglomerate. This agglomerate is then extruded and/or calendared into a layer. Secondly, layers with different properties are combined by calendaring and/or pressing. Thirdly, the current collector is pressed or calendared into the combined layers.

In one embodiment of the invention the GDL is made by a wet mixture of the high surface area carbon and a PTFE suspension. The amount of PTFE should be in the range from 20 to 45 wt% and is preferably about 35 wt%.

In another embodiment of the invention the GDL is made from a dry mixture of PTFE and ammonium bicarbonate. The amount of PTFE should be in the range 20 to 45 wt% and is preferably about 35 wt%. The particle size of the ammonium bicarbonate should preferably be < 20 µm and most preferably < 10 µm.

In another embodiment of the invention the AL is made from a dry mixture of PTFE, high surface area carbon and the catalysts. The amount of PTFE should be in the range 5 to 40 wt% and is preferably about 15 wt%. The amount of catalysts should be in the range from 10 to 50 wt% and preferably 10 to 35 wt%. The amount of high surface area carbon should be in the range 10 to 85 wt% and preferably 50 to 60 wt%.

In another embodiment of the invention the AL is made from a wet mixture of PTFE suspension, high surface area carbon and the catalyst. The amount of PTFE should be in the range 5 to 40 wt % and is preferably about 15 wt%. The amount of catalysts should be in the range from 5 to 50 wt% and preferably 10 to 30 wt%. The amount of high surface area carbon should be in the range 10 to 85 wt% and preferably 50 to 60 wt%.

In another embodiment of the invention the OEL is made from a dry mixture of PTFE and catalyst. High surface area carbon and/or ammonium bicarbonate are added to increase flooding of the OEL by electrolyte. The amount of PTFE in the active layer should be in the range from 3 to 15 wt% and is preferably about 5 wt%. The amount of high surface area carbon should be in the range from 30 to 60 wt % and is preferably about 50 wt%. The amount of catalyst should be in the range from 25 to 66 wt% and is preferably about 45 wt %. If ammonium bicarbonate is used as a pore forming material the amount should be in the range from 30 to 75 wt% and is preferably about 55 wt%.

In another embodiment of the invention the OEL is made from a wet mixture of PTFE and catalyst. High surface area carbon and/or ammonium bicarbonate are added to increase flooding of the OEL by electrolyte. The amount of PTFE in the active layer should be in the range from 3 to 15 wt% and is preferably about 5 wt%. The amount of high surface area carbon should be in the range from 30 to 60 wt % and is preferably about 50 wt%. The amount of catalyst should be in the range from 25 to 66 wt% and is preferably about 45 wt %. If ammonium bicarbonate is used as a pore forming material the amount should be in the range from 30 to 75 wt% and is preferably about 55 wt%. The amount of PTFE used in these samples should be as low as possible to allow sufficient electrolyte penetration into the sample. However, if the amount of PTFE is too low (e.g. <3 wt%) the mechanical stability of the electrode is low and the electrode tends to break up and the powder catalyst is not maintained inside the electrode. In order to further increase electrolyte penetration a pore forming material such as ammonium bicarbonate can be used. Alternatively carbon or graphite can be added. Capillary forces between the carbon particles will the result in electrolyte flooding of the electrode.

If both a bifunctional catalyst and an oxygen reduction catalyst are present in the same layer of the electrode (i.e. a layer having the combined properties of the AL and the OEL), then the amounts of catalyst referred to above relate to the total amount of both catalysts. In the resulting electrode, the ratio of bifunctional catalyst to oxygen reduction catalyst is preferably about 40:60.

In a further embodiment of the invention the combination of an oxygen evolution catalyst with a bifunctional catalyst is used in rechargeable metal-air battery, fuel cell or primary metal-air battery applications. The bifunctional electrode of the invention can also be used for electrolysis in a chloralkali cell or in water electrolysis.

In a second aspect, the invention provides a metal-air battery comprising a bifunctional electrode as described above and a metal electrode. The metal electrode is preferably made of Zn, Fe, Al , Mg or Li. The metal-air battery is preferably a secondary battery.

In a third aspect, the invention provides a metal hydride-air battery. Metal hydride materials used in Ni-metal hydride batteries can be used as the anode material in these batteries. The metal hydride electrode can preferably be selected from a group consisting of AB₅, AB₂, AB and A₂B, where A is an alkaline earth metal, transition metal, rare-earth metal, or actinide and B is a transition metal of the iron group. The metal hydride-air battery is preferably a secondary battery.

In addition to the bifunctional electrode of the invention, the construction of these primary or secondary metal-air and metal hydride-air batteries may be performed in any way known to the person skilled in the art.

Accordingly, a metal-air battery comprises a bifunctional electrode as described above as the air-permeable cathode; a metal electrode as the anode, which is preferably made of Zn, Fe, Al, Mg or Li; and a suitable electrolyte. The metal electrode may be a solid plate electrode, a sintered porous electrode, a sintered mixture of the metal and oxides or an electrode of powder or pellets. The structure and design of the electrode is largely determined by the desired application. It is an advantage that the electrode is slightly porous as the metal oxides formed by metal dissolution often have a lower density than the pure metals. An alkaline solution or polymer often separates the air electrode from the metal electrode and the battery also may include a current collector (e.g. nickel). The battery functions through the reduction of oxygen from the ambient air at the cathode, which reacts with the metal anode to generate a current. The battery may be recharged by applying voltage between the anode and cathode and reversing the electrochemical reaction. During recharging the battery releases oxygen into the atmosphere through the air-permeable cathode.

A metal hydride-air battery comprises a bifunctional electrode as described above as the air-permeable cathode; a metal hydride electrode as the anode, and a suitable electrolyte. The metal hydride is preferably AB₅, AB₂, AB and A₂B, where A is an alkaline earth metal, transition metal, rare-earth metal, or actinide and B is a transition metal of the iron group. The structure and design of the electrode is largely determined by the desired application. The battery functions through the reduction of oxygen from the ambient air at the cathode, which reacts with the absorbed hydrogen released from the metal-hydride material. The battery may be recharged by applying voltage between the anode and cathode and reversing the electrochemical reaction. During recharging the battery releases oxygen into the atmosphere through the air-permeable cathode.

### Examples

The invention is illustrated by the following examples.

### EXAMPLE 1

This example shows that the use of an oxygen reduction catalyst in combination with a bifunctional catalyst increases the rate of oxygen reduction and the cycle life of the bifunctional electrode. MnSO₄ was selected as the oxygen reduction catalyst and La₂O₃ was selected as the bifunctional catalyst.

Air electrodes were prepared using high surface area carbon, the catalysts in the form of powders and PTFE suspension.

The active layer was prepared using 15 wt % PTFE as a suspension containing 60 weight % PTFE in a water dispersion (Aldrich), 63.5 wt % high surface area carbon (XC500, Cabot Corporation) and the electrocatalysts: 13 wt % manganese sulfate (MnSO₄, Prolabo) and 8.5 wt % lanthanum oxide (La₂O₃, Merck). As a first step, high surface area carbon was mixed with both catalysts in water. Separately, PTFE suspension was mixed with water. Then, the PTFE solution was added to the carbon solution and the materials were mixed and agglomerated into a slurry. The slurry was then mixed in an ultrasonic bath for 30 minutes. The slurry was then dried at 300 °C for 3 hours to remove any surfactants. The dried mixture was then agglomerated and an organic solvent was added to form a paste and the paste was then calendared into a thin layer to form the active layer (AL).

A hydrophobic layer (GDL) was produced by the same method. In this layer only high surface area carbon (65 wt %) and PTFE (35 wt %) were used.

The two layers were then calendared together. Finally, a nickel mesh current collector was pressed into the electrode at 80 °C and 70 bars. The electrode was then dried at 70 °C to remove the organic solvent.

For comparison, electrodes were also made using either 17 wt % MnSO₄ or 17 wt % La₂O₃ as catalyst. These electrodes were made using the method described above, with the active layer containing 15 wt % PTFE as a suspension containing 60 weight % PTFE in a water dispersion and 68 wt % high surface area carbon.

The electrodes were tested in half cell configuration with a three electrode set-up using a Ni counter electrode and a Zn reference electrode. The air electrodes were placed in a holder that enabled air access to one side of the electrode and on the opposite side the electrode was exposed to a 6.6 M KOH solution. The electrochemical performance for the oxygen reaction was measured using a multi channel potentiostat from Arbin Instruments.

Figure 1 shows the polarisation curve of an electrode with 13 wt % MnSO₄ and 8.5 wt % La₂O₃ as the catalyst combination. As comparative examples electrodes with 17 wt % MnSO₄ and 17 wt % La₂O₃ are shown. Figure 1 shows a plot of i/(mA/cm²) as the x-axis against EN vs. Zn as the y-axis. The figure shows that by using a combination of MnSO₄ and La₂O₃ as catalysts, increased activity is obtained as compared to electrodes with only MnSO₄ or La₂O₃.

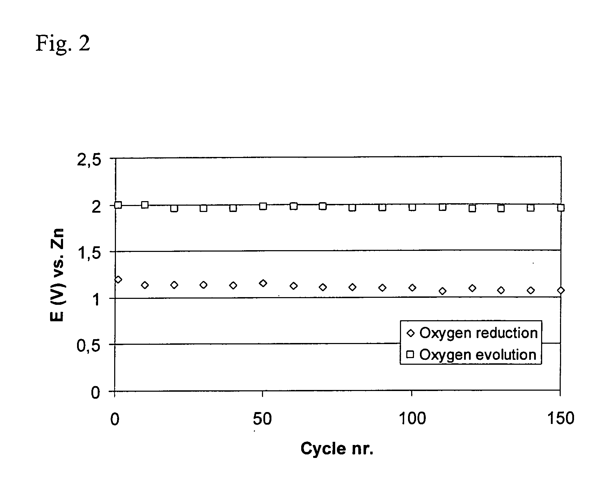

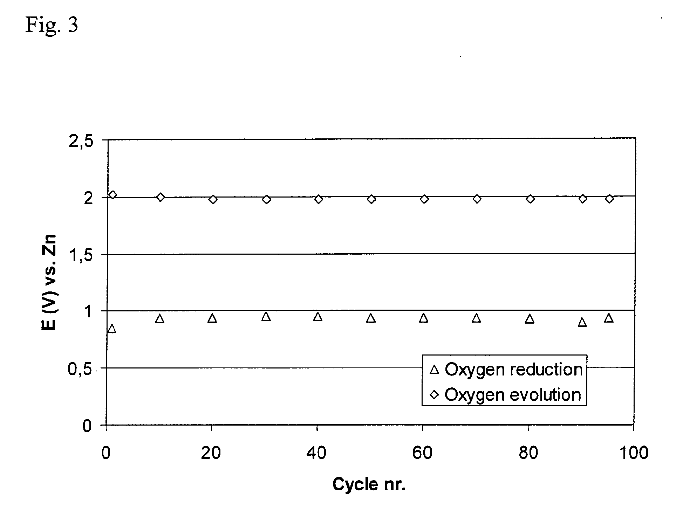

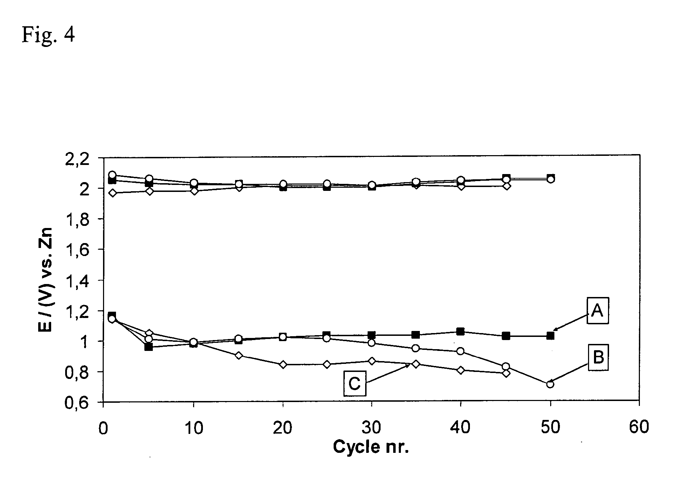

In Figure 2 the stability of the electrode using a combination of MnSO₄ and La₂O₃ as catalysts is shown under oxygen reduction and oxygen evolution cycling of the electrodes. The electrode was cycled at anodic and cathodic currents of 100 mA/cm². The surface area of the electrode was 12.5 cm² and the electrode was charged and discharged with a capacity of 626 mAh/cm² per cycle. Figure 2 shows a plot of E(V) vs. ZN as the y-axis against cycle number as the x-axis and shows that the electrode with a combination of a bifunctional catalyst and an oxygen reduction catalyst is stable for more than 150 cycles.

The comparative electrodes containing as catalyst either only MnSO₄ or only La₂O₃ were also tested. Cycling experiments at 100 mA/cm² and a charge/discharge capacity of 50 mAh/cm² gave lower charge/discharge stability. With MnSO₄ as the catalyst a significant drop in voltage was observed after 5-10 cycles. With La₂O₃ the charge/discharge stability was better (around 30-50 cycles could be obtained before a drop in voltage), however, with the sole use of this material as catalyst the activity of the oxygen reduction reaction is significant lower as is shown in Figure 1.

### EXAMPLE 2

This example shows the activity and stability of air electrodes when MnO₂ is used as the oxygen reduction catalyst combined with La₂O₃ as the bifunctional catalyst. Air electrodes were prepared using high surface area carbon, powdered catalysts and PTFE suspension.

The active layer was prepared using 15 wt % PTFE as a suspension containing 60 weight % PTFE in a water dispersion (Aldrich), 69 wt % high surface area carbon (XC500, Cabot Corporation) and the electrocatalysts: 8 wt % manganese oxide (MnO₂, Merck) and 8 wt % lanthanum oxide (La₂O₃, Merck). As a first step, high surface area carbon was mixed with both catalysts in water. Separately, PTFE suspension was mixed with water. Then, the PTFE solution was added to the carbon solution and the materials were mixed and agglomerated into a slurry. The slurry was then mixed in an ultrasonic bath for 30 minutes. The slurry was then dried at 300 °C for 3 hours to remove any surfactants. The dried mixture was then agglomerated and an organic solvent was added to form a paste and the paste was then calendared into a thin layer to form the active layer (AL).

A hydrophobic layer (GDL) was produced by the same method. In this layer only high surface area carbon (65 wt %) and PTFE (35 wt %) were used.

The two layers were then calendared together. Finally, a nickel mesh current collector was pressed into the electrode at 80 °C and 70 bars. The electrode was then dried at 70 °C to remove the organic solvent.

The electrodes were tested in half cell configuration with a three electrode set-up using a Ni counter electrode and a Zn reference electrode. The air electrodes were placed in a holder that enabled air access to one side of the electrode and on the opposite side the electrode was exposed to a 6.6 M KOH solution. The electrochemical performance for the oxygen reaction was measured using a multi channel potentiostat from Arbin Instruments.

Figure 3 shows the polarisation curve of an electrode with 8 wt % MnO₂ and 8 wt % La₂O₃ as the catalyst combination. Stability of the electrode is shown under oxygen reduction and oxygen evolution cycling of the electrodes. The electrode was cycled at anodic and cathodic currents of 100 mA/cm². The surface area of the electrode was 12.5 cm² and the electrode was charge and discharged with a capacity of 626 mAh/cm² per cycle.

Figure 3 shows a plot of E(V) vs. Zn as the y-axis against cycle number (1 to 95 cycles) as the x-axis and shows that by combining MnO₂ as the oxygen reduction catalyst with La₂O₃ as a bifunctional catalyst high stability for oxygen evolution and oxygen reduction is obtained. This shows that the choice of oxygen reduction catalyst is not limited to the use of MnSO₄.

### EXAMPLE 3

This example shows how the quantity of the catalyst affects the activity of the air electrode.

Several electrodes were made according to the electrode production procedure described in Examples 1 and 2 in which the amounts of the oxygen reduction catalyst and the bifunctional catalyst were varied.

For all electrodes high surface area carbon (XC500) and 20 wt % PTFE was used in the AL. The GDL was made according to the description given in Examples 1 and 2.

Table 1 shows how the amounts of the catalysts affect the stability of the electrodes.

**Table 1: Discharge voltage and charge/discharge stability of bifunctional air electrodes.**

| Wt % / MnSO₄ | Wt % / MnO₂ | Wt % / La₂O₃ | Capacity / Ah ⁽¹⁾ | Discharge Voltage / V vs Zn ⁽²⁾ |
|---|---|---|---|---|
| 1.6 | 0 | 8 | 75 | 0.98 |
| 13 | 0 | 8.5 | 375 | 1.18 |
| 40 | 0 | 8 | 3.1 | 1.18 |
| 12 | 0 | 1.6 | 31.3 | 0.96 |
| 12 | 0 | 40 | 3.1 | 1.1 |
| 0 | 1.6 | 8 | 40.6 | 0.88 |
| 0 | 8 | 8 | 81 | 0.94 |
| 0 | 40 | 8 | 12.5 | 0.82 |

| | | | | |
|---|---|---|---|---|
| ⁽¹⁾ The charge/discharge stability is reported as the total capacity of oxygen evolution or oxygen reduction. ⁽²⁾ The discharge voltage is reported as the stable voltage at 100 mA/cm² discharge rate. | | | | |

From the table it can be seen that when the amount of the oxygen reduction catalyst predominates the voltage during discharge is high, however, the stability for cycling is reduced. If the amount of the bifunctional catalyst is increased high stability is obtained but the discharge voltage is lowered. Best results are obtained with a mix of an oxygen reduction catalyst in the range 5 to 20 wt % and a bifunctional catalyst in the range 5 to 15 wt %. A very good result was obtained with 13 wt % MnSO₄ and 8.5 wt % La₂O₃.

### EXAMPLE 4

This example shows the increase in the activity and stability of Ag when used as a bifunctional catalyst together with an oxygen reduction catalyst. The example shows that the use of Silver (Ag) as a catalyst in combination with MnSO₄ increases the charge/ discharge stability of the air electrode under oxygen reduction and oxygen evolution. As comparative examples an air electrode with Ag and an electrode with Ag and La₂O₃ is shown.

The Ag catalyst was prepared by dissolving AgNO₃ (Merck) in water with addition of a high surface area carbon (XC72, Cabot Corporation). The mixture was filtered. A solution of formaldehyde (CH₂O, Prolabo) and NaOH (Prolabo) was added to the Ag-carbon solution at 85 °C and the resulting slurry was mixed for one hour in order to deposit Ag onto the carbon support. The slurry was then dried and crushed into a fine powder for use as the catalyst in the air electrode.

To prepare the PTFE-coated high surface area carbon, a PTFE suspension solution was added drop by drop to a wet mixture of high surface area carbon (XC72, Cabot Corporation) mixed with the catalyst (MnSO₄ or La₂O₃). The mixture was stirred for 30 minutes in an ultrasonic bath. After mixing, the slurry was filtered and dried at 150 °C for 30 minutes and at 280 °C for 30 minutes.

The AL of the air electrode was prepared by wet mixing PTFE solution with high surface area carbon (XC72) as described above. The catalyst powder (Ag on XC72, Ag on XC72 and MnSO₄ or Ag on XC72 and La₂O₃) was then added to the PTFE-coated high surface area carbon, blended for 2 minutes with a solution of isopropanol/water (15:35) and then dried in the oven at 220 °C for 2 hours. The powder was crushed and a paste was formed by adding an organic solvent. The paste was then calendared into a thin layer (0.7 to 1 mm) to form the AL of the electrode.

The GDL of the air electrode was prepared by using a wet mixture of high surface area carbon XC72 (65 wt %) with PTFE suspension (35 wt %). Both materials were separately mixed with water for 30 minutes and then the PTFE suspension was added drop by drop to the carbon solution. After the slurry was well stirred and mixed in an ultrasonic bath for 30 minutes, it was dried at 300 °C for 3 hours and then crushed into a fine powder. The GDL was prepared by adding an organic solvent to the powder. The paste was then calendared into a thin layer (0.7 to 1 mm).

The AL and the GDL layers were calendared together and a nickel mesh current collector was pressed into the electrode (70 bars, 80 °C). The electrode was then dried at 70 °C to remove the solvent.

The electrodes were tested in half cell configuration with a three electrode set-up using a Ni counter electrode and a Zn reference electrode. The air electrodes were placed in a holder that enabled air access to one side of the electrode and on the opposite side the electrode was exposed to a 6.6 M KOH solution. The electrochemical performance for the oxygen reaction was measured using a multi channel potentiostat from Arbin Instruments.

Figure 4 shows the polarisation curve of an electrode prepared with use of 19 wt % AgNO₃ mixed with 8 wt % MnSO₄ in the AL (shown as A). As comparative examples, electrodes with the use of only 19 wt % AgNO₃ (B) or 19 wt % AgNO₃ mixed with 8 wt % La₂O₃ (C) are shown.

The electrode was cycled at anodic and cathodic currents of 100 mA/cm². The surface area of the electrode was 12.5 cm² and the electrode was charged and discharged with a capacity of 626 mAh/cm² per cycle.

Figure 4 shows a plot of E(V) vs. Zn as the y-axis against cycle number as the x-axis and, as can be seen from the figure, after 50 cycles the electrode with a bifunctional catalyst (Ag) and an oxygen reduction catalyst (A) gives high cycle life and high discharge voltages. For the electrode with only Ag (B) a drop in the discharge voltage is observed with cycling. For the electrode with Ag and La₂O₃ (C) stability is obtained, however, the discharge voltage is at a low value after repeated cycling.

## Claims

1. A bifunctional air electrode for a metal-air battery comprising a gas diffusion layer, an active layer, an oxygen evolution layer and a current collector in electrical contact with the active layer; wherein the active layer contains an oxygen reduction catalyst and a bifunctional catalyst.

2. A bifunctional air electrode according to claim 1 wherein the oxygen reduction catalyst is selected from MnO₂, KMnO₄, MnSO₄, SnO₂, Fe₂O₃, Co₃O₄, Co, Fe, Pt and Pd.

3. A bifunctional air electrode according to claim 1 or 2 wherein the bifunctional catalyst is selected from La₂O₃, Ag₂O, Ag, spinels and perovskites.

4. A bifunctional air electrode according to claim 1 wherein the oxygen reduction catalyst is MnSO₄ and the bifunctional catalyst is La₂O₃.

5. A bifunctional air electrode according to any preceding claim wherein the active layer comprises a hydrophobic binder and a pore former.

6. A bifunctional air electrode according to claim 5 wherein the hydrophobic binder is PTFE and/or wherein the pore former is selected from ammonium bicarbonate, high surface area carbon and graphite.

7. A bifunctional air electrode according to any preceding claim wherein the oxygen evolution layer and the active layer comprise a single layer which has the combined properties of both layers.

8. A battery comprising either a metal electrode or a metal hydride electrode, and an air electrode, wherein the air electrode comprises a bifunctional air electrode according to any preceding claim.

9. A metal-air battery according to claim 8 wherein the metal electrode comprise metal selected from Zn, Al, Mg, Fe, Li.

10. A metal hydride-air battery according to claim 8 wherein the metal hydride electrode comprises a metal hydride selected from a group consisting of AB₅, AB₂, AB and A₂B, where A is an alkaline earth metal, transition metal, rare-earth metal, or actinide and B is a transition metal of the iron group.

11. A battery according to any of claims 8 to 10 which is a secondary battery.

12. A method for manufacturing a bifunctional air electrode according to claim 1 comprising:
a) forming an active layer by:
(i) mixing a pore forming material, a binding material, an oxygen reduction catalyst and a bifunctional catalyst to produce an agglomerate;
(ii) adding an organic solvent to the dry agglomerate to produce a paste;
(iii) calendering the paste into a thin sheet to form an active layer;
b) forming a gas diffusion layer by:
(i) mixing a pore forming material and a binding material to produce an agglomerate;
(ii) adding an organic solvent to the dry agglomerate to produce a paste;
(iii) calendering the paste into a thin sheet to form a gas diffusion layer;
c) combining said active layer and said gas diffusion layer;
d) pressing a current collector into either of the layers to form the gas diffusion electrode.
